# EUROPEAN PATENT SPECIFICATION

(11) **EP 2 054 753 B1**
(45) Date of publication and mention of the grant of the patent: **04.05.2011**
(21) Application number: 07811208.3
(22) Date of filing: 08.08.2007
(51) Int. Cl.: G02B 27/14, G02B 27/30

(54) **COMBINING OUTPUTS OF DEFFERENT LIGHT SOURCES**
KOMBINATION DER AUSGABEN VERSCHIEDENER LICHTQUELLEN
MÉLANGE DES SORTIES DE DIFFÉRENTES SOURCES LUMINEUSES

(30) Priority: 11.08.2006 US 822207 P
(43) Date of publication of application: 06.05.2009
(73) Proprietor: Light Prescriptions Innovators, LLC., Altadena, CA 91001 (US)
(72) Inventor: CHAVES, Julio Cesar, 28026 Madrid (ES); FALICOFF, Waqidi, Stevenson Ranch, CA 91381 (US); MINANO, Juan Carlos, 28015 Madrid (ES); BENITEZ, Pablo, 28029 Madrid (ES); PARKYN, William A., Lomita, CA 90717 (US)
(74) Representative: Cooper, John
(86) International application number: PCT/US2007/017682
(87) International publication number: WO 2008/021158

(56) References cited:
- WO-A-00/60396
- US-A- 5 434 754
- US-A- 5 700 078
- US-A1- 2005 243 570
- US-A1- 2006 164 607

## Description

### CROSS-REFERENCE TO RELATED APPLICATIONS

This application claims benefit of United States Provisional Patent Application No. 60/822,207, filed August 11, 2006.

### FIELD OF THE INVENTION

The present invention relates generally to blending light from different sources in desired proportions, and in one aspect to a device for providing collimated light with a flux that is a non-integer multiple of the output of a source element such as an LED, while mitigating the disadvantages of using multiple source elements. Light-emitting diodes (LEDs), and more particularly to light collection/distribution systems that mix the light output from multiple light-emitting diodes (LEDs) (and, optionally, phosphors as well) of several different wavelengths for étendue-limited applications such as high-luminance, high-luminosity displays. High luminance is always of paramount value, and etendue-limited displays deliver luminance nearly as high as that of the LEDs themselves, with high efficiency (>80%) as well.

Although embodiments of the invention are described that blend visible light of different colors, and especially red, green, and blue light, the invention in its broadest sense is not limited to those colors, or to visible light.

### DESCRIPTION OF RELATED ART

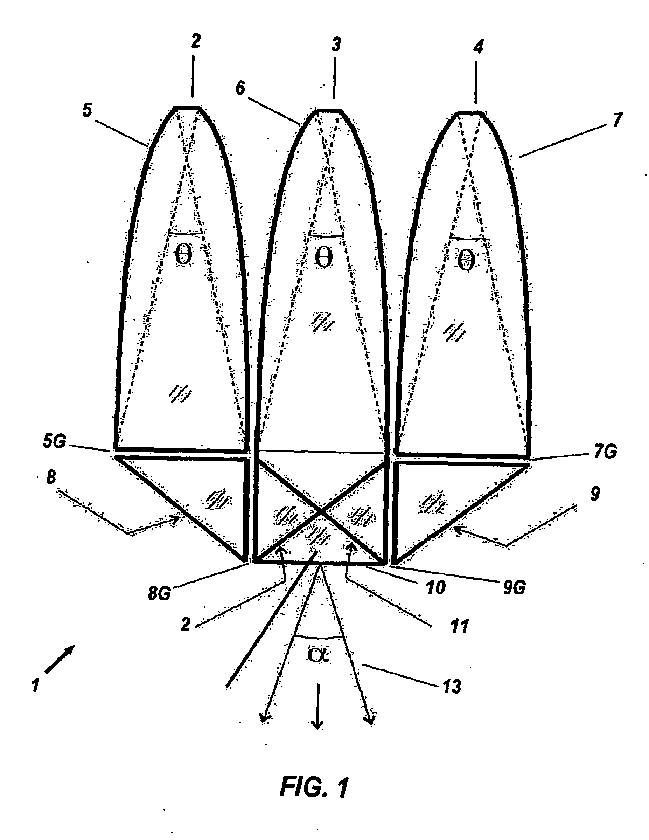

An important problem that needs to be addressed is how to combine the output from multiple LEDs sources to produce a high-flux, high-luminance source, wherein the "combined source" has a smaller etendue than the combined values of the individual LED sources. Ideally, the combined source would have an etendue no larger than the largest LED in the system, and the system would operate without a substantial loss of flux. In US published Patent Application No. 2005/0243570 A1 titled "OPTICAL MANIFOLD FOR LIGHT-EMITTING DIODES" of Chaves *et al,* filed April 25, 2005 (commonly assigned and having overlapping inventorship with the present application), there are several embodiments that show how this may be achieved. For example, FIG. 48 of the above-referenced '570 application is repeated here as FIG. 1, wherein optical manifold 1 combines the light from red LED 2, green LED 3, and blue LED 4, respectively using crossed-CPC collimators 5, 6, and 7, with internal collimator beamwidth 9. Prisms 8 and 9 deflect light fro two of the collimators 5 and 7 into prism 10, in which are mounted crossed dichroic mirrors (filters) 11 and 12. The third collimator 6 feeds directly into the prism 10. The three colors combine into an output beam 13, with beamwidth α = arcsin (n sin θ), where n is the refractive index of the material of the collimators. In this embodiment the exit aperture of the device has an etendue (in a theoretically perfect implementation) that is equal to the etendue of one of the LEDs (which are all of the top emitting type).

This embodiment, however, as well as others in that application, has limitations. First, the device in FIG. 1 can only mix one green, one blue and one red LED at a time if the etendue limitation described above is to hold, that is, if the etendue of the output aperture is to be the same as one of the LEDs. Other embodiments in the '570 application show how the configuration of FIG. 1 can be generalized to multiple LEDs, but to conserve etendue the numbers of LEDs of each color are equal. It would be desirable to have a device that could mix different numbers of light sources of different sorts and still hold this etendue constraint. For example, it would be desirable to mix light from different numbers of LEDs of different colors, such as more than one green LED in combination with each red LED and blue LED. One reason why this is desirable is that a single green LED typically has insufficient luminosity relative to a red or blue LED of the same area and type for the RGB triad to achieve white light. Typically two green LEDs are used for every one red and one blue LED in order to get a balanced white from their suitably adjusted admixture. That is done because currently available green LEDs are less efficient than currently available red and blue LEDs, even though the green light itself has maximum luminous efficacy. Incorporating two green LEDs doubles the required etendue of the system. The actual ratio required is only 1.5, but for practical reasons a whole number of LEDs of each color is necessary, and LEDs of matched size and current consumption are desirable.

Also in the embodiment shown in FIG. 1 the optical path lengths for the different color LEDs are not equal. In FIG. 1, the optical path length of the light exiting the device from LED 3 is shorter than the path length from LEDs 2 & 4, on either side of LED 3. This can cause a problem for those applications where etendue matching of components is critical.

The present specification discloses several novel embodiments that combine multiple LEDs of the same color such that the etendue of the combined source is substantially the same as the étendue of just one of the LEDs. This is accomplished with a reduction in system efficiency that is sufficiently slight to be acceptable for many applications. Finally, an embodiment is disclosed that achieves this constraint on étendue and also provides near equality of the average optical path lengths of the LED colors, which makes possible a further improvement in far-field color mixing.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:

FIG. 1 is a cross-sectional view of a previously proposed three-color combining optical manifold.

FIG. 2 is a cross-sectional view of an example of a device for combining light from two sources with controlled intensity and étendue.

FIG. 3 is a perspective view of an example of an optical manifold, for combining light from four LEDs of three colors, incorporating the device of FIG. 2.

FIG. 4 is a cross-sectional view of another example of an optical manifold, for combining light from four LEDs of three colors.

FIG. 5 is a cross-sectional view of another example of an optical manifold, for combining light from four LEDs of three colors.

FIG. 6A is a perspective view of a first embodiment of an optical manifold, for combining light from LEDs of three colors.

FIG. 6B is a different perspective view of the optical manifold shown in FIG. 6A.

FIG. 7A is a perspective view similar to FIG. 6A of a second embodiment of an optical manifold, incorporating features of the optical manifolds shown in FIGS. 5 and 6A.

FIG. 7B is a different perspective view of the optical manifold shown in FIG. 7A.

FIG. 7C is a different perspective view of the optical manifold shown in FIG. 7A.

FIG. 7D is a different perspective view of the optical manifold shown in FIG. 7A.

### DETAILED DESCRIPTION

Reference will now be made in detail to illustrative examples and to embodiments of the present invention, example of which is illustrated in the accompanying drawings, in which like numbers represent the same or similar elements.

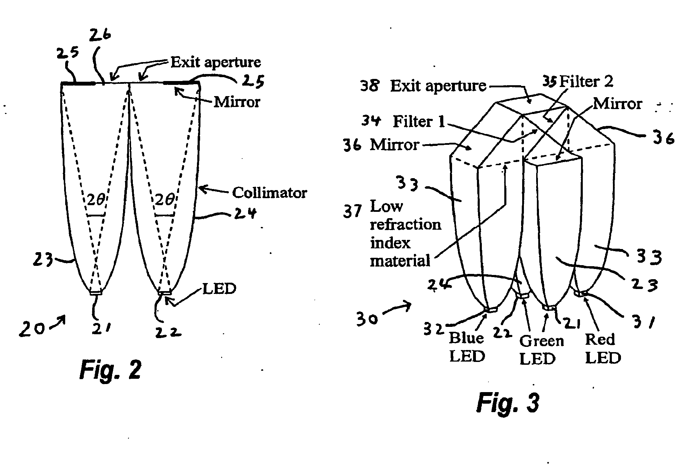

FIG. 2 shows a device, indicated generally by the reference numeral 20, that combines the output of two LEDs 21, 22 of the same or different colors. In the case where the colors are different there will be spatial separation of colors. This may or may not be an issue depending on the application. On each of the LEDs (in this case one on the left and one on the right) there is a collimator 23, 24. At the top of each collimator there is a mirror 25 that covers a fraction of the exit aperture 26 of the collimator 23, 24. As shown in FIG. 2, each collimator 23, 24 is a compound parabolic concentrator, with its intensity distribution being nearly invariant across its aperture, so that etendue is in direct proportion to the exposed proportion of the exit aperture area. In the case of FIG. 2 each mirror 25 covers approximately half the light output area from the respective collimator 23, 24. The device 20 is not limited to this fraction. However, the output étendue of the collimator 23, 24 is dependent on the effective area of the exit aperture. A pair of collimators 23, 24 as shown in FIG. 2, each with half of its exit aperture 26 uncovered, has the same étendue as a single similar collimator with its exit aperture fully exposed.

As shown in FIG. 2, the reflector cover 25 is specular so as to recycle the light back toward the LED 21, 22 such that there are minimal losses between the mirror and the LED. A highly efficient collimator/concentrator, such as those described in our above-referenced earlier '570 application, is required to achieve high transfer efficiency in both directions. Such collimators are known to those skilled in the art of nonimaging optics: Examples include solid dielectric and open CPCs and variable index of refraction collimators. Cross-CPCs have been used in the past for coupling to square LEDs and work well in one direction only. However, when the optic is used in a recycling mode the light output from a cross-CPC collimator can produce a beam pattern where some of the flux is outside the acceptance angle of the optic as a concentrator, and is lost. A round CPC can be constructed that does not exhibit this loss. Therefore, collimator/concentrator devices other than cross CPCs are used if a high recycling efficiency is required.

In the case where both LEDs 21, 22 are the same color and the mirrors 25 cover half the exit apertures 26, the amount of flux that escapes from the exit aperture on the first pass is equal to the flux from a single identical collimator with one LED and with a fully uncovered exit aperture. If it is assumed for simplicity that the collimators have 100% transfer efficiency, the theoretical maximum output flux is equal to the flux of one LED, although in practice that is a few percent more than the best performing collimators known at this time. Recycling of light reflected off the mirrors 25 increases the output above that corresponding to one LED. The higher the transfer efficiency of the collimator/concentrator optic, and the higher the reflectance of the LED, the greater the total output flux. Currently commercially available LEDs typically have an effective reflectance of around 70%, which (ignoring losses at the mirror 25) allows a boost in flux to about 1.5 times that emitted on the first pass. The device shown in FIG. 2, with the two exit ports 50% covered, can thus emit a total flux about 1.5 times that emitted by a single collimator with a single LED and a fully uncovered exit port 26. (This is less than 1.5 times the original output of the LED, because of actual losses in the material of the optic 23, 24 and at the mirror 25.)

In addition, several LED architectures, such as the top emitting devices made by OSRAM Opto Semiconductors of Germany, have a top surface that is etched. This surface will scatter light striking in the reverse direction as well as in the forward direction. This can help to increase the chances of recycled rays escaping through the exit aperture on the next pass, thus increasing the total flux output. Raytrace simulations carried out by the inventors indicate that it is currently possible using existing commercially available LEDs, together with the highest performing collimators, to achieve a flux output that is between 1.3 and 1.5 times the output of the single LED in the configuration of FIG. 2. This increase is for many applications all that is needed to match the output of green LEDs with blue and red LEDs to produce white light.

The output can be reduced, without affecting the beam size or étendue, by reducing the reflectance of the mirrors 25 or of the LEDs 21, 22. The output can be increased, at the expense of an increase in étendue, by reducing the area of the exit apertures 26 covered by the mirrors 25.

FIG. 3 shows how the device of FIG. 2 can be combined with the optical manifold of FIG. 1. FIG. 3 shows an optical manifold 30 comprising four LEDs, two green LEDs 21, 22, one red LED 31, and one blue LED 32. The collimators 33 for the red and blue LEDs direct the light from the LEDs to 45 degree prism mirrors 36 after traveling through a low index material 37 or air gap (represented by dotted lines), corresponding to the air gaps 5G, 7G, 8G, 9G in FIG. 1. The 45 degree oriented mirrors 36 redirect the red and blue light to a cross-dichroic filter assembly 34, 35. One of the two dichroic filters 35 lets through red and green, and reflects blue light to an exit aperture 38, while the second dichroic filter 34 lets through blue and green, and reflects red light to the exit aperture 38. The part of the light from the two green LEDs that is not recycled by the mirrors 25 is transmitted through the cross-dielectric filter 34, 35 and exits out the top of the device at the exit aperture 38, mixed with the reflected red and blue light. It is desirable for most practical applications that the output beams for all three colors have nearly the same beam spread and be spatially the same size at the exit aperture. This is difficult to achieve in this embodiment, since the optical path length of the green light, after escaping its dual collimator exit aperture, is shorter than the path lengths of the light from the red and blue sources (which in this case have equal path lengths) emitting from their collimators. The recycling path length in the dual collimator for the green sources is not an issue, as only the distance from the aperture exit of this optic need be considered. A cubical light pipe between the exit port 26 of the green collimators 23, 24 and the cross-dichroic filter assembly 34, 35 would equalize the path lengths, but would result in the four LEDs no longer being co-planar. In practical configurations, it is usually desirable to have the LEDs in a single plane, as shown in FIG. 3, so that they can be mounted on a single circuit board.

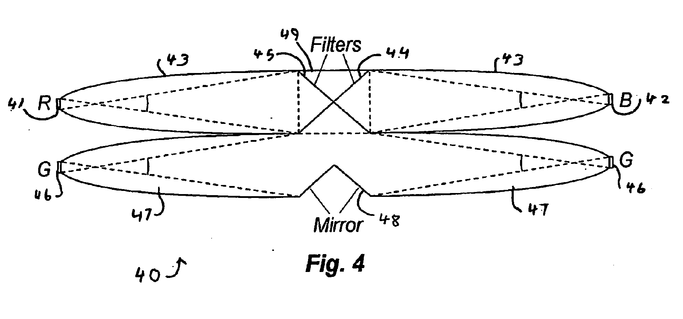

Referring to FIG. 4, in an alternative approach 40 the 45 degree prisms are not required. Also, in the optical manifold 40 a red LED 41 and a blue LED 42 are connected to collimators 43 that face each other on opposite sides of a cross-dichroic filter assembly 44, 45. Two green LEDs 46 are connected to collimators 47 that face each other on opposite sides of a V-shaped mirror 48 that redirects part of the light from the green LEDs 46 to the filters 44, 45. The filters operate the same as in the embodiment of FIG. 3. In the manifold shown in FIG. 4, the part of the light from each green LED 46 that does not fall on the V-shaped mirror 48 enters the collimator 43 of the other green LED 46, and is recycled. The only difference in recycling efficiency compared with FIG. 3 is that resulting from losses at the mirror 48 instead of the mirrors 25. The non-uniformity in light distribution is opposite in FIGS. 3 and 4, because in FIG. 4 it is the green light that has the longer path length from the exit port of its individual collimator to the exit port 49 of the manifold 40.

It is possible to replace the lower green section 46, 47, 48 of the manifold 40 of FIG. 4 with the device 20 shown in FIG. 2. That would make the average optical path lengths for the three colors the same. However, in that modified embodiment the LEDs reside on three different planes, rather than a single plane, as in FIG. 3, or two parallel planes, as in FIG. 4, and the overall configuration of the manifold is less compact than either FIG. 2 or FIG. 4. Those factors are disadvantages for some practical applications.

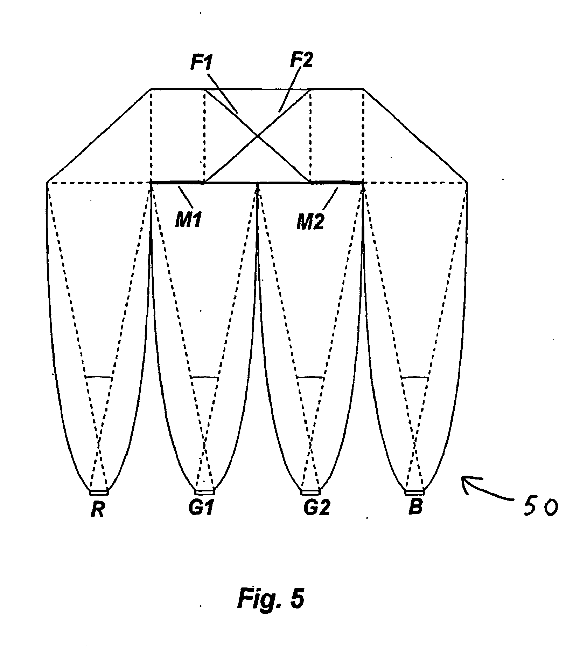

FIG. 5 shows still another example of an optical manifold 50 that uses the device of FIG. 2. In this case red LED R, blue LED B, and two green LEDs G1 & G2 are on one line and in the same plane, but the average optical path length for green is shorter than the path length for red & blue by an even greater amount than in FIG. 3. Mirrors M1 & M2 recycle some of the green light to enhance green luminance.

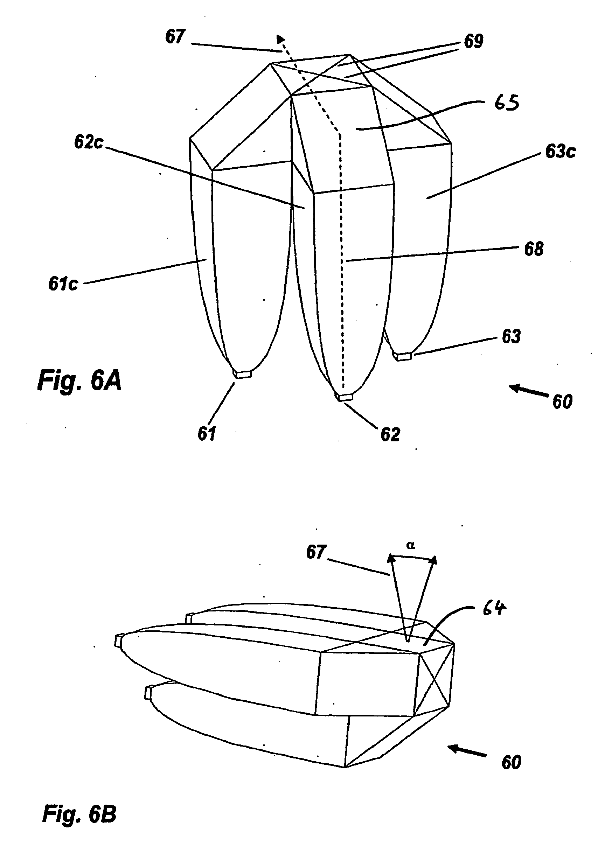

FIG. 6A and 6B are perspective views of a further form of optical manifold 60 that has the same average optical path length for three LEDs and has the three LEDs positioned on the same plane. The optical manifold 60 combines the output of LEDs 61, 62, & 63 of differing dominant wavelengths, as collimated by square collimators 61c, 62c, & 63c (shown as cross-CPCs) respectively, such that rays 67 emerge from an exit port 64 of the optical manifold 60 at approximately 90 degrees to the parallel optical axes of the collimators. This is illustrated by dotted arrow 68 in FIG. 6A which shows a central ray (on the optical axis of the collimator 62c) from the middle LED 62 first striking a 45-degree mirror 65, which redirects the ray through a pair of crossed dichroic mirrors/filters 69 to the exit aperture 64 on the side of the device. FIG. 6B shows a different perspective view of the device (in a horizontal position), showing output beam 67 with angular spread α. The crossed dichroic filters 69 are configured so that light from the other LEDs 61 and 63 is reflected into the same direction as the light from the middle LED 62. For example, if the LED 61 is a blue LED, the LED 62 is a green LED, and the LED 63 is a red LED, then the dichroic mirrors 69 can have the same spectral properties as the dichroic mirrors 34, 35 shown in FIG. 3.

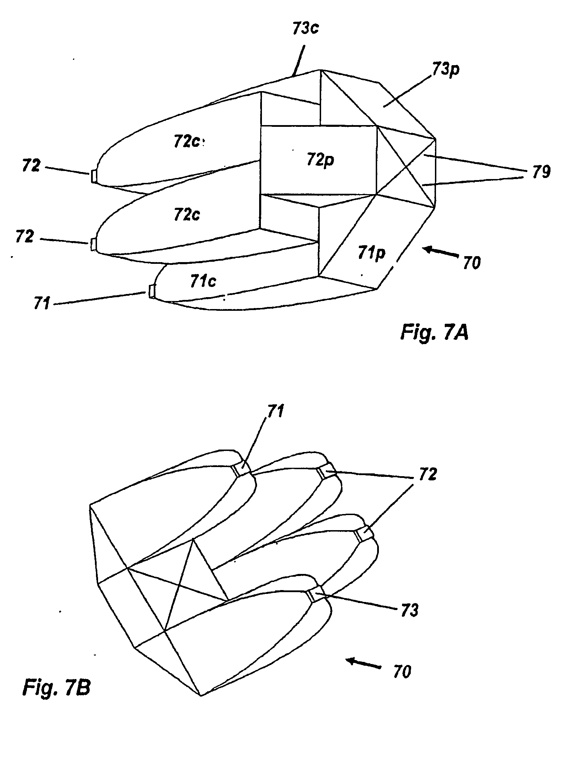

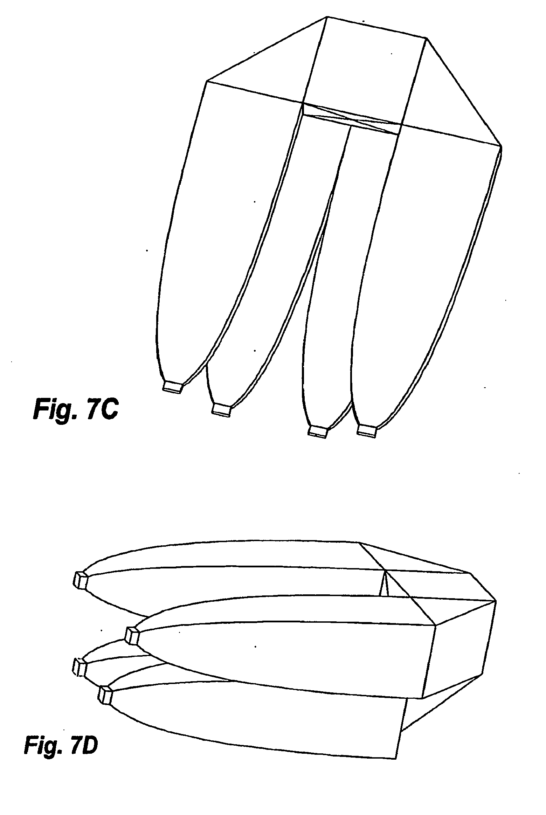

If higher green output is required then the device 20 of FIG. 2 can be combined with the optical manifold 60 of FIG. 6A and B. Referring to FIGS. 7A, B, C, and D, an optical manifold 70 comprises a red LED 71, two green LEDs 72, and a blue LED 73, each with respective square collimators 71c, 72c, & 73c (shown as cross-CPCs). Mirror prisms 71p, 72p, and 73p, similar to those shown in FIG. 6, send the light into crossed dichroic mirrors 79.

Another approach to increasing the luminance or efficacy of the green LEDs is to replace the green LED with a combination of a blue LED with a green phosphor. In this approach there are two blue LEDs, one red LED, and a transparent slab of green phosphor is remotely illuminated by one of the blue LEDs.

## Claims

1. An optical manifold (60,70) comprising:
at least three collimators (61 c-63c, 71 c-73c) of substantially equal length and having central axes;
respective light sources (61-63, 71-73) at entry ports of the collimators (61 c-63c, 71 c-73c);
the at least three collimators (61 c-63c, 71 c-73c) being arranged with their central axes parallel and with their light sources (61-63, 71-73) in a common plane; and **characterised by**
reflectors (65, 71 p-73p) positioned to direct light from exit ports of each of the collimators (61 c-63c, 71 c-73c) to a component (69, 79) arranged to combine the light into a common light output (64), wherein the mean optical path lengths for said light from the exit ports of the respective collimators (61 c-63c, 71 c-73c) to the common light output (64) are substantially equal.

2. The optical manifold according to claim 1, wherein the reflectors (65, 71 p-73p) are prisms.

3. The optical manifold according to claim 1 or claim 2, wherein the light sources (61-63, 71-73) are not all of the same color, and the component (69, 79) arranged to combine the light comprises at least one frequency-selective mirror.

4. The optical manifold according to any of claims 1 to 3, wherein the light sources (61-63, 71-73) comprise at least one LED and at least one phosphor, further comprising an LED arranged to excite the phosphor.

5. The optical manifold according to any of claims 1 to 4, wherein each of the collimators (61 c-63c, 71 c-73c) is connected to the component (69, 79) arranged to combine the light by a prism (65, 71 p-73p) such that the optical path length from an exit port of the collimator (61 c-63c, 71 c-73c) to an exit port (64) of the optical manifold is substantially identical for all of the coll imators (61 c-63c, 71 c-73c).

6. The optical manifold according to any of claims 1 to 3 or according to claim 5 when dependent on any one of claims 1 to 3, wherein the at least three collimators (71 c-73c) include first and second collimators (72c), each arranged to receive light from a source (72) and transmit the light to an exit port of the respective collimator; and
a separator (25) arranged to emit some of the light from the exit ports of the first and second collimators (72c) and to recycle some of the light into the collimators, the light emitted from the first and second collimators passing to one of the said reflectors (72p).

7. The optical manifold according to claim 6, wherein the first and second collimators (72c) are substantially identical, and the light emitted from the exit ports of the first and second collimators (72c) has a greater total flux than a notional single substantially identical collimator without a separator (25), and has less than a proportionately greater étendue.

8. The optical manifold according to claim 7, wherein the light emitted from the exit ports of the first and second collimators (72c) has between 1.3 and 1.7 times the total flux of the notional single substantially identical collimator, and has an étendue substantially equal to that of the notional single substantially identical collimator.

9. The optical manifold according to any of claims 6 to 8, wherein the separator (25) covers only a fraction of the exit apertures of the first and second collimators (72).

10. The optical manifold according to any of claims 6 to 9, wherein the first and second collimators (72c) are arranged with their exit ports side by side, and wherein the separator (25) comprises reflectors covering only non-adjacent parts of the exit ports of the first and second collimators (72c).

## Patentansprüche

1. Ein optischer Verteiler (60, 70), der Folgendes beinhaltet:
mindestens drei Kollimatoren (61 c-63c, 71 c-73c) von im Wesentlichen gleicher Länge und mit zentralen Achsen;
jeweilige Lichtquellen (61-63, 71-73) an Eingangskanälen der Kollimatoren (61c-63c, 71 c-73c);
wobei die mindestens drei Kollimatoren (61 c-63c, 71 c-73c) mit ihren zentralen Achsen parallel und mit ihren Lichtquellen (61-63, 71-73) in einer gemeinsamen Ebene angeordnet sind; und durch Folgendes **gekennzeichnet**:
Reflektoren (65, 71 p-73p), die positioniert sind, um Licht von Ausgangskanälen von jedem der Kollimatoren (61c-63c, 71c-73c) zu einer Komponente (69, 79), die angeordnet ist, um das Licht in einer gemeinsamen Lichtausgabe (64) zu kombinieren, zu leiten, wobei die mittleren optischen Weglängen für das Licht von den Ausgangskanälen der jeweiligen Kollimatoren (61 c-63c, 71 c-73c) zu der gemeinsamen Lichtausgabe (64) im Wesentlichen gleich sind.

2. Optischer Verteiler gemäß Anspruch 1, wobei die Reflektoren (65, 71 p-73p) Prismen sind.

3. Optischer Verteiler gemäß Anspruch 1 oder Anspruch 2, wobei die Lichtquellen (61 - 63, 71-73) nicht alle die gleiche Farbe aufweisen und die zum Kombinieren des Lichts angeordnete Komponente (69, 79) mindestens einen frequenzselektiven Spiegel beinhaltet.

4. Optischer Verteiler gemäß einem der Ansprüche 1 bis 3, wobei die Lichtquellen (61-63, 71-73) mindestens eine LED und mindestens einen Phosphor beinhalten, wobei sie ferner eine LED beinhalten, die angeordnet ist, um den Phosphor anzuregen.

5. Optischer Verteiler gemäß einem der Ansprüche 1 bis 4, wobei jeder der Kollimatoren (61c-63c, 71c-73c) mit der Komponente (69, 79), die angeordnet ist, um das Licht zu kombinieren, durch ein Prisma (65, 71 p-73p) verbunden ist, so dass die optische Weglänge von einem Ausgangskanal des Kollimators (61c-63c, 71 c-73c) zu einem Ausgangskanal (64) des optischen Verteilers für alle Kollimatoren (61 c-63c, 71 c-73c) im Wesentlichen identisch ist.

6. Optischer Verteiler gemäß einem der Ansprüche 1 bis 3 oder gemäß Anspruch 5, wenn von einem der Ansprüche 1 bis 3 abhängig, wobei die mindestens drei Kollimatoren (71 c-73c) einen ersten und zweiten Kollimator (72c) umfassen, die jeweils angeordnet sind, um Licht von einer Quelle (72) zu empfangen und das Licht zu einem Ausgangskanal des jeweiligen Kollimators zu übertragen; und eine Trennvorrichtung (25), die angeordnet ist, um etwas von dem Licht von den Ausgangskanälen des ersten und zweiten Kollimators (72c) zu emittieren und etwas von dem Licht in den Kollimatoren wiederzuverwerten, wobei das von dem ersten und zweiten Kollimator emittierte Licht zu einem der Reflektoren (72p) geht.

7. Optischer Verteiler gemäß Anspruch 6, wobei der erste und zweite Kollimator (72c) im Wesentlichen identisch sind und das von den Ausgangskanälen des ersten und zweiten Kollimators (72c) emittierte Licht einen größeren Gesamtlichtstrom als ein fiktiver einzelner, im Wesentlichen identischer Kollimator ohne eine Trennvorrichtung (25) aufweist und weniger als eine proportional größere Étendue aufweist.

8. Optischer Verteiler gemäß Anspruch 7, wobei das von den Ausgangskanälen des ersten und zweiten Kollimators (72c) emittierte Licht zwischen 1,3- und 1,7-mal den Gesamtlichtstrom des fiktiven einzelnen, im Wesentlichen identischen Kollimators aufweist und eine Étendue aufweist, die im Wesentlichen gleich der des fiktiven einzelnen, im Wesentlichen identischen Kollimators ist.

9. Optischer Verteiler gemäß einem der Ansprüche 6 bis 8, wobei die Trennvorrichtung (25) nur einen Bruchteil der Ausgangsöffnungen des ersten und zweiten Kollimators (72) abdeckt.

10. Optischer Verteiler gemäß einem der Ansprüche 6 bis 9, wobei der erste und zweite Kollimator (72c) mit ihren Ausgangskanälen Seite an Seite angeordnet sind, und wobei die Trennvorrichtung (25) Reflektoren beinhaltet, die nur nicht angrenzende Teile der Ausgangskanäle des ersten und zweiten Kollimators (72c) abdecken.

## Revendications

1. Un collecteur optique (60, 70) comprenant :
au moins trois collimateurs (61 c à 63c, 71 c à 73c) de longueur substantiellement égale et présentant des axes centraux ;
des sources de lumière respectives (61 à 63, 71 à 73) au niveau d'orifices d'entrée des collimateurs (61 c à 63c, 71 c à 73c) ;
les au moins trois collimateurs (61 c à 63c, 71 c à 73c) étant arrangés avec leurs axes centraux parallèles et avec leurs sources de lumière (61 à 63, 71 à 73) dans un plan commun ; et **caractérisé par**
des réflecteurs (65, 71 p à 73p) positionnés pour diriger de la lumière depuis des orifices de sortie de chacun des collimateurs (61 c à 63c, 71 c à 73c) vers un composant (69, 79) arrangé pour combiner la lumière en une sortie de lumière commune (64), dans lequel les longueurs moyennes de chemin optique pour ladite lumière depuis des orifices de sortie des collimateurs respectifs (61 c à 63c, 71 c à 73c) vers la sortie de lumière commune (64) sont substantiellement égales.

2. Le collecteur optique selon la revendication 1, dans lequel les réflecteurs (65, 71 p à 73p) sont des prismes.

3. Le collecteur optique selon la revendication 1 ou la revendication 2, dans lequel les sources de lumière (61 à 63, 71 à 73) ne sont pas toutes de la même couleur, et le composant (69, 79) arrangé pour combiner la lumière comprend au moins un miroir sélectif de fréquence.

4. Le collecteur optique selon n'importe lesquelles des revendications 1 à 3, dans lequel les sources de lumière (61 à 63, 71 à 73) comprennent au moins une DEL et au moins un luminophore, comprenant de plus une DEL arrangée pour exciter le luminophore.

5. Le collecteur optique selon n'importe lesquelles des revendications 1 à 4, dans lequel chacun des collimateurs (61 c à 63c, 71 c à 73c) est connecté au composant (69, 79) arrangé pour combiner la lumière grâce à un prisme (65, 71 p à 73p) de façon à ce que la longueur de chemin optique depuis un orifice de sortie du collimateur (61 c à 63c, 71 c à 73c) vers un orifice de sortie (64) du collecteur optique soit substantiellement identique pour tous les collimateurs (61 c à 63c, 71 c à 73c).

6. Le collecteur optique selon n'importe lesquelles des revendications 1 à 3 ou selon la revendication 5 lorsqu'elle dépend de n'importe laquelle des revendications 1 à 3, dans lequel les au moins trois collimateurs (71 c à 73c) comportent des premier et deuxième collimateurs (72c) arrangés chacun pour recevoir de la lumière d'une source (72) et transmettre la lumière à un orifice de sortie du collimateur respectif ; et
un séparateur (25) arrangé pour émettre une partie de la lumière depuis les orifices de sortie des premier et deuxième collimateurs (72c) et pour recycler une partie de la lumière dans les collimateurs, la lumière émise depuis les premier et deuxième collimateurs passant à l'un desdits réflecteurs (72p).

7. Le collimateur optique selon la revendication 6, dans lequel les premier et deuxième collimateurs (72c) sont substantiellement identiques, et la lumière émise depuis les orifices de sortie des premier et deuxième collimateurs (72c) a un flux total plus grand qu'un collimateur nominal unique substantiellement identique sans séparateur (25), et a une étendue inférieure à une étendue proportionnellement plus grande.

8. Le collecteur optique selon la revendication 7, dans lequel la lumière émise depuis les orifices de sortie des premier et deuxième collimateurs (72c) a entre 1,3 et 1,7 fois le flux total du collimateur nominal unique substantiellement identique, et a une étendue substantiellement égale à celle du collimateur nominal unique substantiellement identique.

9. Le collecteur optique selon n'importe lesquelles des revendications 6 à 8, dans lequel le séparateur (25) couvre seulement une fraction des ouvertures de sortie des premier et deuxième collimateurs (72).

10. Le collecteur optique selon n'importe lesquelles des revendications 6 à 9, dans lequel les premier et deuxième collimateurs (72c) sont arrangés avec leurs orifices de sortie côte à côte, et dans lequel le séparateur (25) comprend des réflecteurs couvrant seulement des parties non adjacentes des orifices de sortie des premier et deuxième collimateurs (72c).
